# EUROPEAN PATENT SPECIFICATION

(11) **EP 1 083 484 B1**
(45) Date of publication and mention of the grant of the patent: **03.01.2007**
(21) Application number: 00307482.0
(22) Date of filing: 31.08.2000
(51) Int. Cl.: G06F 9/46

(54) **Terminating a group of related threads by modifying the program counter of selected stack frames**
Beendung einer Gruppe verwandter Fäden durch Modifzierung des Programmzählers von ausgewählten Kellerspeicherrahmen
Terminaison d'un groupe de fils d'exécution apparentés par modification du compteur de programme d'échelons de pile selectionnés

(30) Priority: 10.09.1999 US 394121; 30.11.1999 US 168222 P; 27.03.2000 US 536253
(43) Date of publication of application: 14.03.2001
(73) Proprietor: SUN MICROSYSTEMS, INC., Palo Alto, California 94303 (US)
(72) Inventor: Foote, William A., Cupertino, CA 95014 (US); Czajowski, Grzegorz J., Mountain View, CA 94040 (US); Kawahara, Hideya, Mountain View, CA 94043 (US)
(74) Representative: Alton, Andrew

(56) References cited:
- EP-A- 1 087 295
- US-A- 5 784 613
- PATRICK CHAN ET AL: "The Java Class Library, Second Edition, Volume 1 (pages 1723-1750)" , JAVA CLASS LIBRARIES, XX, XX, PAGE(S) 1723-1750 XP002239909 * the whole document *
- WALLACH D S ET AL: "UNDERSTANDING JAVA STACK INSPECTION" PROCEEDINGS OF THE 1998 IEEE SYMPOSIUM ON SECURITY AND PRIVACY. OAKLAND, CA, MAY 3 - 6, 1998, IEEE SYMPOSIUM ON SECURITY AND PRIVACY, LOS ALAMITOS, CA: IEEE COMPUTER SOC, US, vol. CONF. 19, 1998, pages 1-12, XP000669379 ISBN: 0-7803-4994-6
- LINDHOLM T., YELLIN. F.: "The Java Virtual Machine Specification" 1997 , ADDISON-WESLEY , USA XP002260763 * page 34, paragraph 2.15 - page 55, paragraph 2.17 * * page 61, paragraph 3.5 - page 70, paragraph 3.9 *
- BACK G ET AL: "Drawing the red line in Java" , HOT TOPICS IN OPERATING SYSTEMS, 1999. PROCEEDINGS OF THE SEVENTH WORKSHOP ON RIO RICO, AZ, USA 29-30 MARCH 1999, LOS ALAMITOS, CA, USA,IEEE COMPUT. SOC, US, PAGE(S) 116-121 XP010355844 ISBN: 0-7695-0237-7 * page 1, paragraph 1 - page 4, paragraph 3.3 *
- "THREAD TERMINATION ENHANCEMENTS" IBM TECHNICAL DISCLOSURE BULLETIN, IBM CORP. NEW YORK, US, vol. 34, no. 4A, 1 September 1991 (1991-09-01), pages 449-451, XP000210976 ISSN: 0018-8689

## Description

The invention relates generally to software applications and, more particularly, to methods and apparatus for aborting threads in an object-based system.

Within an object-based environment, threads are often used to satisfy requests for services. A thread may be thought of as a "sketch pad" of storage resources, and is essentially a single sequential flow of control within a computer program. In general, a thread, or a "thread of control," is a sequence of central processing unit (CPU) instructions or programming language statements that may be independently executed. Each thread has its own execution stack on which method activations reside. As will be appreciated by those skilled in the art, when a method is activated with respect to a thread, an activation is "pushed" on the execution stack of the thread. When the method is deactivated, the activation is "popped" from the execution stack. Since an activation of one method may activate another method, an execution stack operates in a first-in-last-out manner.

LINDHOLM T., YELLIN. F.: "The Java Virtual Machine Specification" 1997, ADDISON-WESLEY, USA describes the general implementation of the Java Virtual Machine and the Java language. In particular, it describes threads, each having their own stack on which frames are pushed from which frames are popped, and exception throwing and handling to abort the execution of a method or thread.

Although threads generally self terminate, one may also wish to forcefully terminate a thread while it is executing. For example, one may wish to terminate a thread whose currently executing code is currently mounting a "denial of service attack." A denial of service attack uses all or most of the local host's resources (*e*.*g*., processor and/or memory resources). For example, code associated with a particular thread may initiate an infinite loop, which functions to open an infinite number of windows. In this example, the code continues to open windows until so many resources are consumed that the particular application that is executing the code (or the entire computer system) crashes or freezes up.

A denial of service attack is generally associated with untrusted code that originates from an unknown source. For example, downloaded computer programs may include methods from an unknown programming source. In other words, the downloaded program may include untrusted code that was maliciously or unintentionally designed to mount a denial of service attack.

Thus, when code begins to misbehave (*e*.*g*., by using an unreasonable amount of resources), it is desirable to kill the thread that is associated with this misbehaving code. One potential solution that has been contemplated is "thread.destroy", which is currently available as a resource within the Java^{™} II Standard Development Kit although it has not been implemented. Thread.destroy works by deallocating the stack associated with the misbehaving thread. In other words, the thread's stack is removed from the scheduler, which schedules threads for execution.

Although this solution may work in some situations, thread.destroy does not clean up the internal data structures that the misbehaving thread may have inconsistently altered. That is, the misbehaving thread may be writing to an internal data structure when it is killed and may only partially fill the internal data structure. For example, the misbehaving thread may initiate a print function by setting a print flag, but not yet write to the print buffer before the misbehaving thread is killed. In this example, a thread.destroy may cause garbage to be printed since the thread was killed before it could write valid print data to the print buffer.

Another solution "thread.stop" is currently available as a resource within the Java™ II Standard Development Kit. Thread.stop throws an exception so that a currently executing method may "catch" the exception and execute any implemented clean up code. Although trusted code is generally designed to perform clean up routines (*e*.*g*., within a "finally" block), untrusted code cannot be trusted to perform such clean up processes. In other words, the untrusted code's may continue to misbehave when an exception is thrown. For example, when an exception is thrown, an untrusted code's "finally" routine may also mount a denial of service attack. Additionally, thread.stop does not provide any mechanisms for cleaning up any inconsistent data structures.

Therefore, improved methods and apparatus for killing threads associated with code that is misbehaving are desired. Additionally, there is a desire to cleanly kill these threads such that data structures are left in a consistent state.

Broadly speaking, the present invention fills these needs by providing apparatus and methods for aborting threads. In one aspect of the invention, thread stacks associated with the misbehaving code are modified so that the thread aborts automatically after modification. A thread is generally deemed to be associated with the misbehaving code if the thread's stack has a program counter within a method associated with the misbehaving code (or the thread is executing methods associated with the misbehaving code). Frames within a stack that is associated with misbehaving code can be divided into two groups: trusted frames and untrusted frames. Trusted frames may be allowed to terminate on their own, while untrusted frames are modified to terminate without executing any remaining untrusted code. In other words, frames that reference untrusted code are not allowed to execute.

A method for aborting a plurality of threads related to misbehaving code that mounts a denial of service attack, each thread corresponding to a thread stack that has at least one frame referencing a code portion, the method comprising: stopping a plurality of related threads that share a same resource or a same object as a thread associated with the misbehaving code; modifying a first set of frames of the thread stacks of the related threads by modifying a program counter in each frame in the first set of frames so that the frames in the first set of frames are automatically popped from their thread stacks during execution, thereby inhibiting execution of the modified frames' referenced code portions; and restarting the plurality of related threads to allow a second set of frames of the thread stacks to execute their referenced code portions.

In a preferred embodiment, the first set of frames are modified by moving references from the code portions to a break instruction. In another aspect, the second set of frames continue to reference the code portions that they were referencing at the same time as the related threads are stopped. In yet another embodiment, any exception handling of the first set of frames is also inhibited.

In another embodiment, a lock on a synchronized block is broken when a particular one of the first set of frames is in the synchronized block. In another aspect, when a particular one of the first set of frames is in a blocking call, a request is initiated indicating that the call be aborted. In another invention permutation, when a particular one of the related threads is not schedulable, the particular thread is made schedulable again.

A computer readable medium containing instructions for aborting a plurality of threads related to misbehaving code that mounts a denial of service attack, each thread corresponding to a thread stack that has at least one frame referencing a code portion, the computer readable medium comprising: computer code for stopping a plurality of related threads that share a same resource or a same object as a thread associated with the misbehaving code; computer code for modifying a first set of frames of the thread stacks of the related threads by modifying a program counter in each frame in the first set of frames so that the frames in the first set of frames are automatically popped from their thread stacks during execution, thereby inhibiting execution of the modified frames' referenced code portions; and computer code for restarting the plurality of related threads to allow a second set of frames of the thread stacks to execute their referenced code portions.

A computer system operable to abort a plurality of threads related to misbehaving code that mounts a denial of service attack, each thread corresponding to a thread stack that has at least one frame referencing a code portion, comprising: a memory; and a processor coupled to the memory, wherein at least one of the memory and the processor are adapted to provide: stopping a plurality of related threads that share a same resource or a same object as a thread associated with the misbehaving code; modifying a first set of frames of the thread stacks of the related threads by modifying a program counter in each frame in the first set of frames so that the frames in the first set of frames are automatically popped from their thread stacks during execution of the modified frames' referenced code portions; and restarting the plurality of related threads to allow a second set of frames of the thread stacks to execute their referenced code portions.

The described embodiments of the present invention have several associated advantages. For example, untrusted code is inhibited from continuing to misbehave through its exception handling code. In contrast, trusted code is allowed to perform exception handling (*e*.*g*., clean up routines) prior to aborting the associated thread. Thus, the likelihood of internal data structures being left in an inconsistent state is minimized. Additionally, all of the threads that share a same resource that is associated with the offending code are aborted. Thus, if the shared resource is left in an inconsistent state by an aborted thread, other threads that are associated with the inconsistent shared resource are prohibited from accessing the inconsistent resource when they too are aborted.

These and other advantages of the present invention will become apparent upon reading the following detailed description and studying the various figures of the drawings.

The description also generally describes a method for aborting a thread that has an associated thread stack with a plurality of frames that are associated with either trusted or untrusted code. A frame within the thread stack of the thread to be aborted is selected. The selected frame from the thread stack of the thread to be aborted is modified when the selected frame is associated with untrusted code. The modification causes the thread to terminate without executing untrusted code. When the selected frame is associated with trusted code, the selected frame is allowed to execute the trusted code.

### BRIEF DESCRIPTION OF THE DRAWINGS

The invention, together with further' advantages thereof, may best be understood by reference to the following description taken in conjunction with the accompanying drawings in which:
Figure 1A is a diagrammatic representation of a thread stack;
Figure 1B is a flowchart illustrating a process of aborting a misbehaving thread in accordance with one embodiment of the present invention;
Figure 2A is a diagrammatic representation of a thread stack;
Figure 2B is a diagrammatic representation of the thread stack of Figure 1 after it has been modified in accordance with one embodiment of the present invention;
Figure 3 is a flowchart illustrating the abort procedure of Figure 2 in accordance with one embodiment of the present invention;
Figure 4 is a flowchart illustrating the procedure of aborting threads belonging to misbehaving code in accordance with one embodiment of the present invention;
Figures 5A through 5B are a flowchart illustrating the procedure of Figure 4 for modifying the thread stacks in accordance with one embodiment of the present invention;
Figure 6 is a diagrammatic representation of a general-purpose computer system suitable for implementing the present invention; and
Figure 7 is a diagrammatic representation of a virtual machine suitable for implementing the present invention.

Reference will now be made in detail to specific embodiments of the invention. While the invention will be described in conjunction with specific embodiments, it will be understood that it is not intended to limit the invention to the described embodiments. On the contrary, it is intended to cover alternatives, modifications, and equivalents as may be included within the scope of the invention as defined by the appended claims. In the following description, numerous specific details are set forth in order to provide a thorough understanding of the present invention. The present invention may be practiced without some or all of these specific details. In other instances, well known process operations have not been described in detail in order not to unnecessarily obscure the present invention.

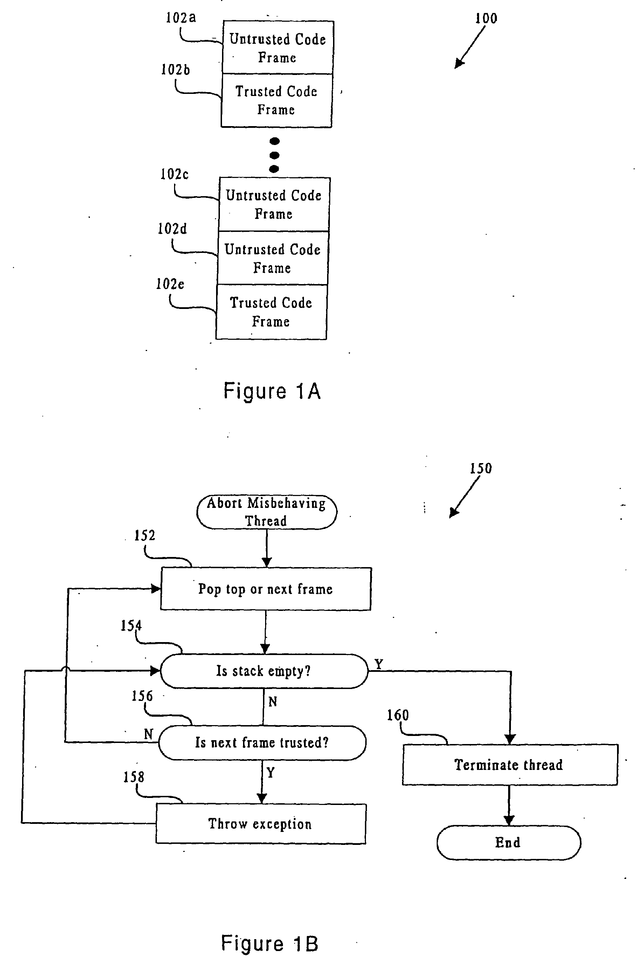

In general, the invention pertains to methods and apparatus for aborting threads. In one aspect, the frames of a thread stack that are associated with misbehaving code are popped from the thread stack. Popping the frames of a thread stack aborts the associated misbehaving thread. Processes for popping a misbehaving thread stack's frames are described below in reference to Figures 1A and 1B. Frames are popped on all thread stacks of all threads that are associated with the misbehaving code. Threads are generally deemed to be associated with the misbehaving code when the threads share a same object or the same resources as the thread that is associated with the misbehaving code.

First, a mechanism for aborting a single thread will be described with reference to Figures 1A and 1B. Figure 1A is a diagrammatic representation of a thread stack 100. Each executing thread typically corresponds to a single thread stack. Each thread stack includes a plurality of stack frames 102. Each stack frame 102 of a particular thread stack corresponds to an individual method of the individual thread that is associated with the particular thread stack. A thread frame typically includes an operations stack (not shown) for storing a plurality of parameters that are used by the associated method. For example, these parameters may include constant and/or variable values.

Additionally, as a method is activated, a corresponding frame is added to the top of the associated thread stack. As other methods of the same thread are activated (*e*.*g*., spawned by the previous method), they are also added to the top of the thread stack above the previous stack frame. Thus, activated methods are layered on top of each other within the thread stack. When the last method to be activated is finished or deactivated, its corresponding stack frame is popped from the top of the frame. The previously activated method may then complete its execution. This method is then deactivated and popped from the thread stack.

For simplicity, each stack frame 102 may be defined as either a trusted code frame (e.g., 102e) or an untrusted code frame (e.g., 102d). Trusted code generally includes any code that originates from a known source or was designed by a known programmer. In other words, the trusted code's design source is known and/or the trusted code has been thoroughly tested before being implemented on the local client. Trusted code is unlikely to mount a denial of service attack. For instance, trusted code may include any system methods that are shipped with the virtual machine.

Untrusted code, on the other hand, generally includes any code that has an unknown source and/or designer. Since one cannot easily ascertain how the untrusted code is written or functions, the untrusted code's resource utilization is also unknown. Over subscription of local resources by the untrusted code may result in a denial of service attack. For example, any code that is downloaded onto a local host from a remote site that is not affiliated with the local host is typically untrusted code. Specifically, when a web page is accessed, applet code associated with an accessed page that is downloaded to the local host will usually fall into the untrusted category. If the downloaded code originates from an unreliable source, such as a hacker or incompetent programmer, the code is untrusted code. That is, the untrusted code may have been specifically or unintentionally designed to mount a denial of service attack against a local host or particular application program.

In general terms, the present invention provides mechanisms for aborting a thread so that untrusted methods are simply popped from the thread stack so as to inhibit untrusted methods from executing. Trusted methods are also popped from the stack by throwing an exception during execution of such a trusted method. In contrast to what happens after an untrusted code frame is popped, after the trusted method is popped, exception handling methods that are associated with the popped method are then allowed to execute. For example, an exception handling method finishes writing to internal data structures so that they are not left in inconsistent states. Exception code that is associated with untrusted code, on the other hand, is not allowed to execute since the exception code cannot be trusted to not cause further damage (*e*.*g*., by spawning other misbehaving threads). Thus, an exception is not thrown during execution of untrusted code.

Figure 1B is a flowchart illustrating a process 150 of aborting a misbehaving thread in accordance with one embodiment of the present invention. Initially, the top frame is popped in operation 152. The first frame is popped since it is associated with the currently misbehaving code. Thus, the untrusted code frame 102a of Figure 1A is popped from the top of the thread stack. Of course, the bottom frame of the thread stack may be popped, depending on how the thread stack is configured. The frame may be popped by any suitable mechanism. For example, the local operating system and virtual machine typically provide this function.

It is then determined whether the stack is empty in operation 154. In other words, it is determined whether the thread has been completely aborted by unwinding its entire thread stack (*e*.*g*., by popping each method frame). If the stack is not empty, it is then determined whether the next frame is trusted in operation 156. In the example of Figure 1A, the next frame is trusted code frame 102b. In this illustration, an exception is then thrown in operation 158. As described above, throwing an exception will likely result in the trusted method's exception handling code "catching" the exception and performing any necessary clean up routine so that data structures are not left in inconsistent states. After the exception handling code or clean up code of the trusted code is executed, the trusted code frame is also popped. It is then determined again whether the stack is empty in operation 154. If the stack is not empty, it is then determined again whether the next frame is trusted in operation 156.

If the frame is not trusted, the next frame is simply popped in operation 152. Untrusted frames are simply popped, whereas trusted code frames are thrown an exception. Popping the frame (either directly or indirectly by throwing an exception) results in a release of any locked objects that are associated with the popped code frame. After all of the code frames are popped, the thread terminates in operation 160.

Although killing a misbehaving thread works well in certain cases (*e*.*g*., where there is only a single misbehaving thread that does not leave any shared objects in an inconsistent state), in certain applications it is preferable to kill all threads that are related to the misbehaving code. For example, an applet may be associated with multiple threads that are each designed to mount a denial of service attack. When a single misbehaving thread is aborted, other associated threads may fill in for the aborted thread and mount another denial of service attack. Additionally, several threads may share the same resource (*e*.*g*., the same object). Thus, killing a single thread may leave a shared object in an inconsistent state for the other threads that use that same object. Thus, all threads that use the same resource or object as the misbehaving thread may be aborted (*e*.*g*., via the procedure of Figure 1B).

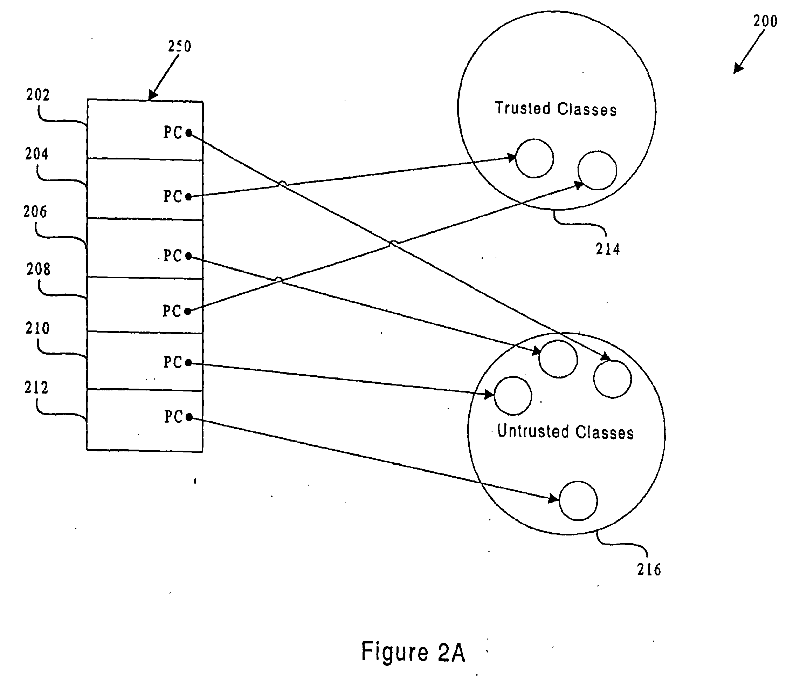

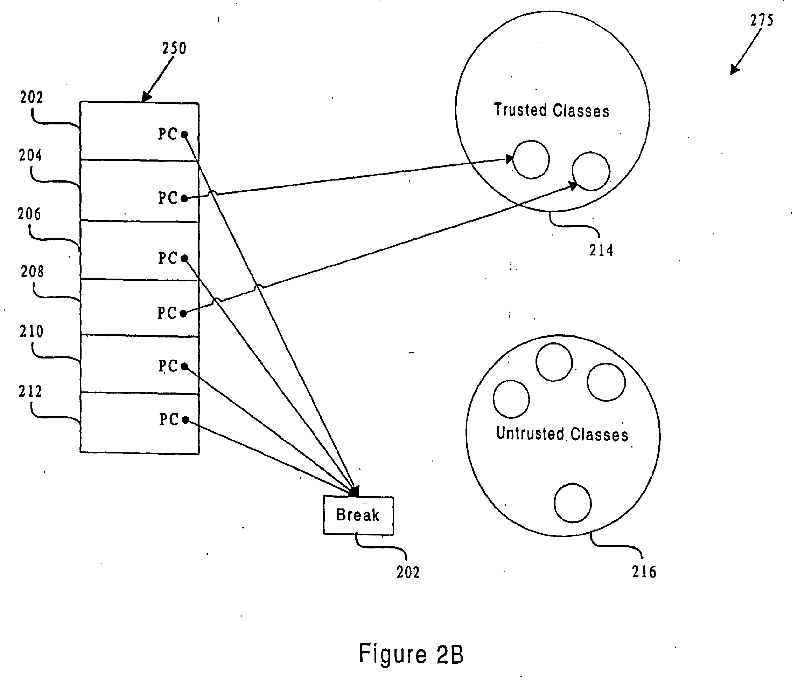

Any suitable mechanism may be utilized to pop an untrusted frame of an untrusted thread or a thread that is related to the untrusted thread. For example, the untrusted frame may be modified so that it automatically pops during execution. Figure 2A is a diagrammatic representation of a thread stack 250 referencing untrusted, as well as trusted code. Figure 2B is a diagrammatic representation of the same thread stack after it has been modified to terminate. As shown, the thread stack 250 includes frames 202 through 212.

At a particular point in time (*e*.*g*., after stopping all threads), each frame references a method that may be classified as untrusted or trusted. In one embodiment, each of the trusted frames has a program counter variable that references a portion of trusted code within one or more trusted classes. The program counter of each frame generally references code that will be executed next (*e*.*g*., when the frame again is at the topmost frame position). As shown in Figure 2A, the program counters of frames 204 and 208 reference code within a trusted class 214. For example, the trusted frames reference system classes. In contrast, each of the untrusted frames has a program counter that references code within a set of untrusted classes 216. As shown, the program counters of frames 202, 206, 210, and 212 point to trusted classes 216. For example, the untrusted frames reference user classes.

When code begins to misbehave, the thread stacks associated with the misbehaving code may be modified in any suitable manner such that the threads quickly terminate. Figure 2B illustrates one such modification. As shown, the program counters for the untrusted thread frames are changed so that they reference a break instruction 202. Specifically, frames 202, 206, 210, and 212 reference break instruction 202. In other words, the program counters for the untrusted frames are moved from the untrusted code 216 to break instruction 202. Additionally, exception handling is inhibited for the untrusted frames. In contrast, the program counters for the trusted frames continue to reference code within the trusted classes 214 and exception handling is allowed to proceed. For example, the trusted frames reference the same code as when the thread was stopped.

As a result of this modification, the break instruction is executed and the untrusted frame is popped from the stack when the untrusted frame reaches the top of the stack. For example, execution of the break instruction includes throwing an exception. Since exception handling is disabled for the untrusted frame, the untrusted frame is immediately popped in response to the thrown exception. After frame 202 is popped, the trusted frame 204 is at the top of the stack. Since the trusted frame's program counter still references its original method code, the trusted frame's method executes normally. In sum, the untrusted methods are short circuited, while the trusted methods are allowed to finish.

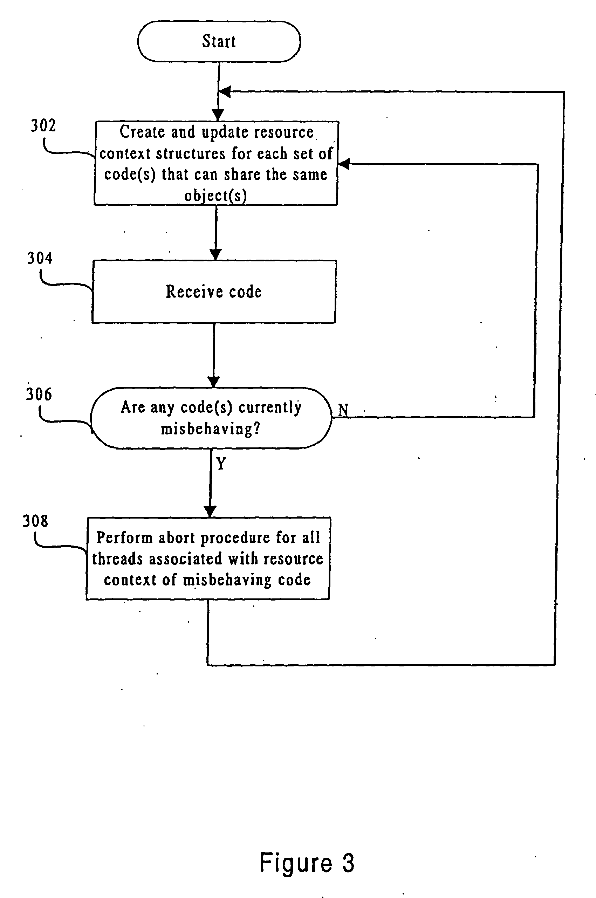

Any suitable procedure may be implemented to modify the thread stacks related to misbehaving code so that the threads automatically abort. Figures 3 is a flowchart illustrating a process 300 for aborting associated threads in accordance with one embodiment of the present invention. A resource context structure is created and updated for each set of codes that can share the same objects in operation 302. The resource context structure generally provides a mechanism for referencing the codes from one or more computer programs that can share the same resource or object. Said in another way, the resource context references methods that were loaded by a same set of classloaders are associated with such resource context. Thus, the code of a currently executing thread will be associated with a particular resource context structure. '

After resource context structures are created, code is then received in operation 304. For example, applets that are associated with an accessed world wide web page are downloaded from a remote server to the local client, and one or more code sets (*e*.*g*., methods) are executed. It is then determined whether there are any codes that are currently misbehaving in operation 306. This determination may be performed in any suitable manner. For examples, any executing code that is approaching the limits of a particular resource may be identified as misbehaving. By way of specific example, if a method is opening a significantly large number of windows within a web browser program, the particular web browser may have a maximum window number of 50. In other words, the web browser does not handle more than 50 windows (*e*.*g*., it crashes when more than 50 are open). In this case, the associated code of the method may be identified as misbehaving when it opens more than 25 windows.

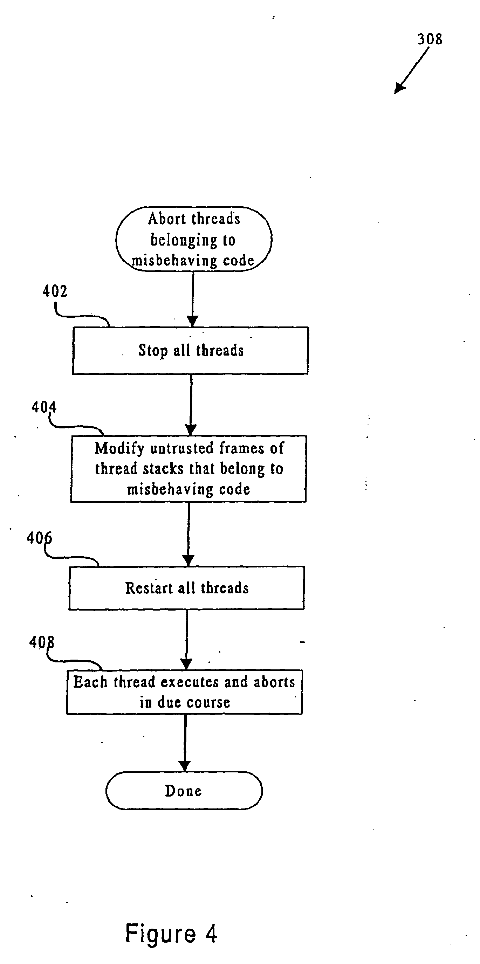

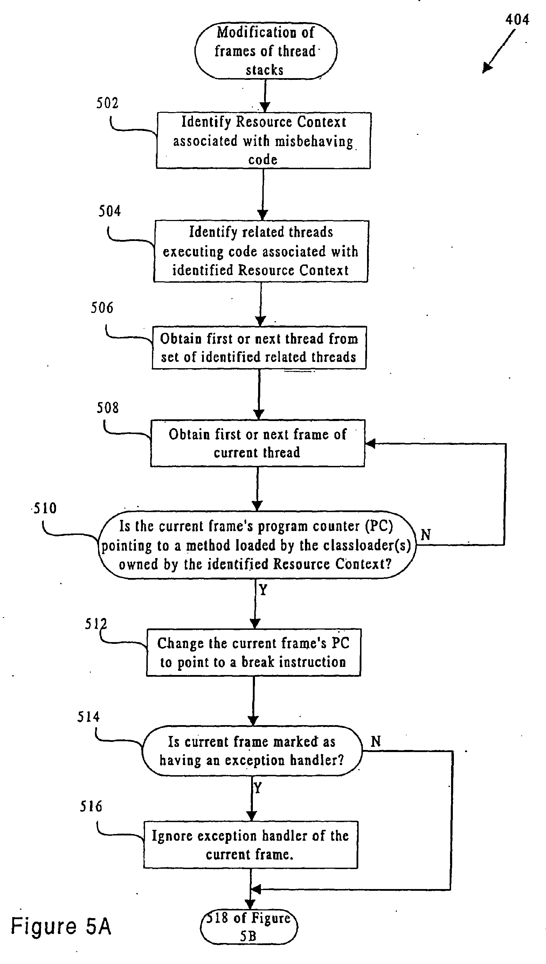

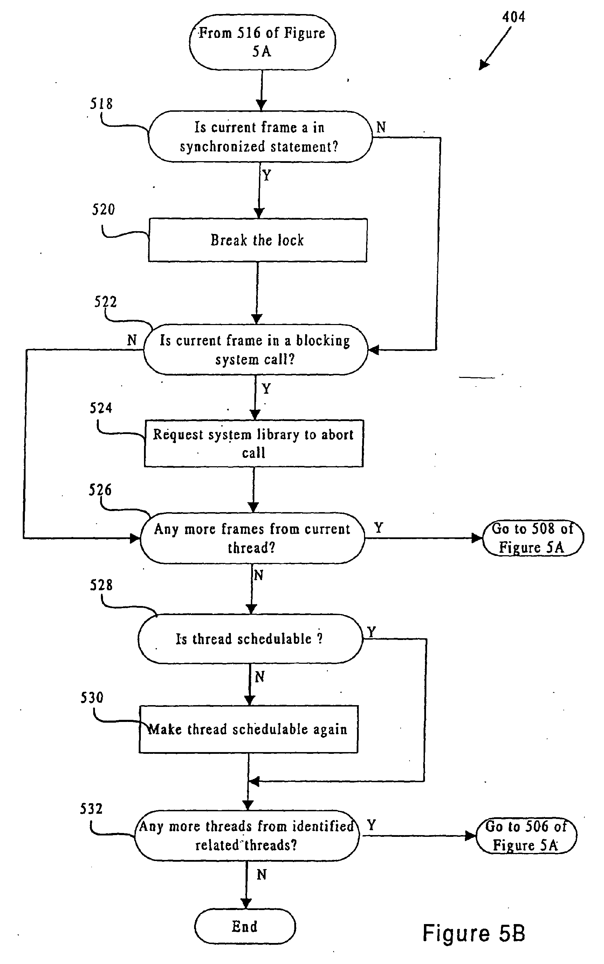

If there is any misbehaving code, an abort procedure is then performed for all threads associated with the resource context of the misbehaving code in operation 308. The associated threads may be aborted in any suitable manner. One mechanism for aborting associated threads is described below with reference Figures 4, 5A, and 5B. After the abort procedure is performed or if there is no misbehaving code, the process 300 is repeated.

Figure 4 is a flowchart illustrating the procedure 308 of aborting threads belonging to misbehaving code in accordance with one embodiment of the present invention. Initially, all threads are stopped in operation 402. For example, a Java^{™} virtual machine is typically configured to stop all threads when an appropriate request is made. By way of specific example, currently implemented garbage collection schemes include a technique for freezing all threads of the system prior to performing garbage collection. One of these thread freezing techniques available within current garbage collection may also be included in the present invention to stop all threads.

The untrusted frames of the thread stacks that belong to misbehaving code are then modified in operation 404. In general terms, the thread stacks are modified so that they will abort when the threads are restarted. After modifying the untrusted thread stacks, all threads are then restarted in operation 406. Each thread then executes and aborts in due course in operation 408 and the abort procedure ends.

Figures 5A through 5B are a flowchart illustrating the procedure 404 for modifying the related thread stacks in accordance with one embodiment of the present invention. That is, frames of the thread stacks that belong to misbehaving code may be modified by implementing the procedure 404 of figures 5A through 5B. Initially, a resource context associated with the misbehaving code is identified in operation 502. A set of related threads executing code associated with the identified resource context is then identified in operation 504. Mechanisms for associating a resource context with a thread and then identifying which resource context is associated with a thread are described in the above referenced U.S. Patent Application No. 09/394,118 by William F. Foote. For example, each thread may be assessed to determine which resource context it is pointing to. The threads that point to the identified resource context are deemed to be associated with the misbehaving code. Alternatively, the resource context may contain references to associated threads so that a particular resource's related threads may be quickly determined from the resource context itself.

A first thread is then obtained from the set of identified related threads in operation 506. A first frame of the current thread is then obtained in operation 508. It is then determined whether the current frame's program counter references a method loaded by the class loaders owned by the identified resource context in operation 510. In general terms, a method belongs to a class, and each class is loaded by a class loader. Thus, each class loader is associated with a resource context and owned by such resource context. A frame is only modified when its method belongs to the identified resource context. If the frame is not loaded by a class loader belonging to the identified resource context, a next frame of the current thread is then obtained in operation 508. However, if this is true, the current frame's program counter is then changed to point to a break instruction in operation 512.

It is then determined whether the current frame is marked as having an exception handler in operation 514. For example, in addition to the program counter, the current frame contains a pointer to an exception handling block (*e*.*g*., a finally block). If the current frame does not have an exception handler, the next operation 516 is skipped. However, if there is an exception handler, the exception handler of the current frame is ignored in operation 516. For example, the pointer to the exception handling code is moved to the break instruction. This is to prevent, for example, a denial of service attack from being launched within exception handling code. The procedure 404 then proceeds to operation 518 illustrated in figure 5B.

In operation 518, it is then determined whether the current frame is in a synchronized statement. A synchronized statement is generally defined as a block of code. While that code is executing, a lock is held on the object provided as an argument to the synchronized block. For example, the following code represents a synchronized block: 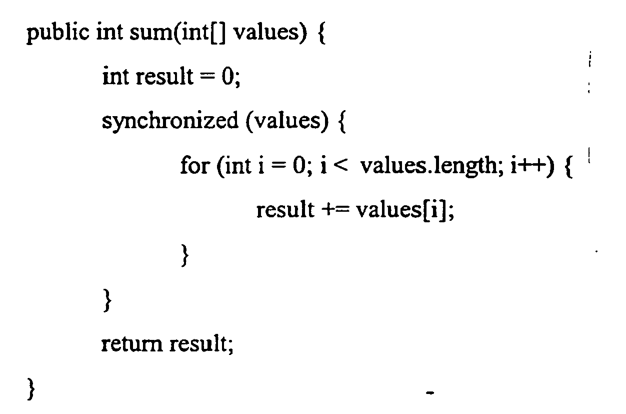 Normally, the synchronized block's lock is released (*e*.*g*., by the virtual machine) after execution of the synchronized code. When the program counter is forcibly moved from the synchronized block to a break instruction, the lock is left unbroken. Thus, the lock is broken in operation 520 when it is determined that the current frame is in a synchronized block. The mechanism used to break a lock depends on the type of lock being used. The current frame will typically have a data structure that identifies the type of lock that is being held. Thus, an appropriate command can then be issued to acquire and release the identified lock. One example is "mutex_unlock." Otherwise, if the current frame is not in a synchronized statement, the breaking operation 520 is skipped.

It is then determined whether the current frame is in a blocking system call in operation 522. For example, system code is performing a native call, such as outputting a character to a serial port or a network operation. A blocking call (*e*.*g*., a network operation) may not complete for a significant amount of time (*e*.*g*., 30 seconds). This extra time required for a blocking system call is, of course, undesirable during an abort procedure. That is, the abort procedure preferably stops all offending threads in a reasonable amount of time. In fact, a denial of service attack may even include utilizing blocking system calls to tie up resources. Thus, if the current frame is in a blocking system call, a request is then sent to the system library to abort the call in operation 524. The abort request depends on the particular type of blocking system call. Each type of blocking system call includes a simple mechanism for aborting it. Typically, a timeout variable utilized by the blocking call may be set to a relatively small value (*e*.*g*., 0 or 1 second) or an abort flag utilized by the blocking call may be set to indicate that the call should abort. If the current frame is not in a blocking system call, the request is not sent and operation 524 is skipped.

It is then determined whether there are any more frames for the current thread in operation 526. If there are more frames, a next frame is then obtained in operation 508. If there are no more frames, it is then determined whether the modified thread is schedulable in operation 528. That is, after all of the frames of the current thread are processed, it is then determined whether the current thread is in a deadlock. For example, code from the current thread fails to enter a locked synchronized statement (*e*.*g*., that is locked by another thread). When this occurs, the current thread waits for the synchronized block to be released. By way of specific example, a first thread acquires block A and then waits for block B, while a second thread acquires block B and then attempts to acquire block A. Thus, both threads are waiting for each other and are deadlocked. When a deadlock occurs in the current Java™ implementation, the thread is put on a wait queue or taken off a list of threads that are schedulable.

It is determined that the thread is not schedulable when it is waiting on a synchronized block and the call to such block is associated with the identified resource context (*i*.*e*., the misbehaving code). If it is determined that the thread is not schedulable, the thread is made schedulable again in operation 530 (*e*.*g*., unsuspended). For example, the current thread is simply taken off the wait queue associated with the synchronized block for which it is waiting (or the thread is added to the thread scheduling queue).

It is then determined whether there are any more threads from the identified related threads in operation 532. If there are more threads, a next thread is then obtained in operation 506. Otherwise, the modification procedure 404 ends. The abort procedure then proceeds to operation 406 of Figure 4 where all threads are restarted. Restart mechanisms are well known to those skilled in the art. The modified frame program counters now point to break instructions. Any suitable break code may be implemented that causes the frame to terminate. For example, the break may include throwing an exception (similar to the breakpoint bytecode number 0xca described in the Java^{™} Virtual Machine Specification, 2^{nd} edition, ISBN 0-201-43294-3). In this case, the untrusted frames are automatically unwound from the stack without execution of exception handling, while the trusted frames execute their original exception handling methods. As a result of these modifications, the related threads substantially immediately terminate.

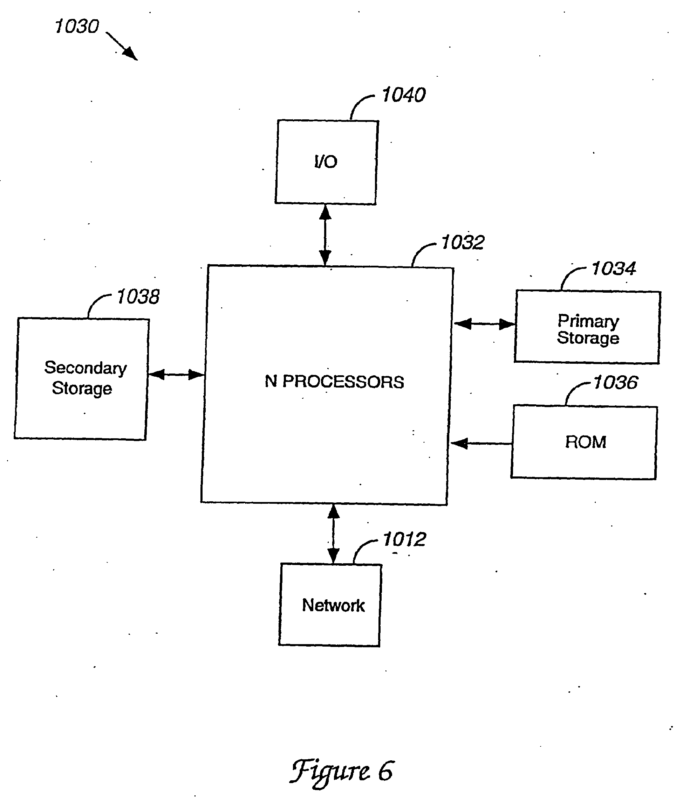

Figure 6 illustrates a typical, general-purpose computer system suitable for implementing the present invention. The computer system 1030 includes any number of processors 1032 (also referred to as central processing units, or CPUs) that are coupled to memory devices including primary storage devices 1034 (typically a read only memory, or ROM) and primary storage devices 1036 (typically a random access memory, or RAM). The computer system may take any suitable form. For example, the computer system may be integrated with a navigational system or television set top box.

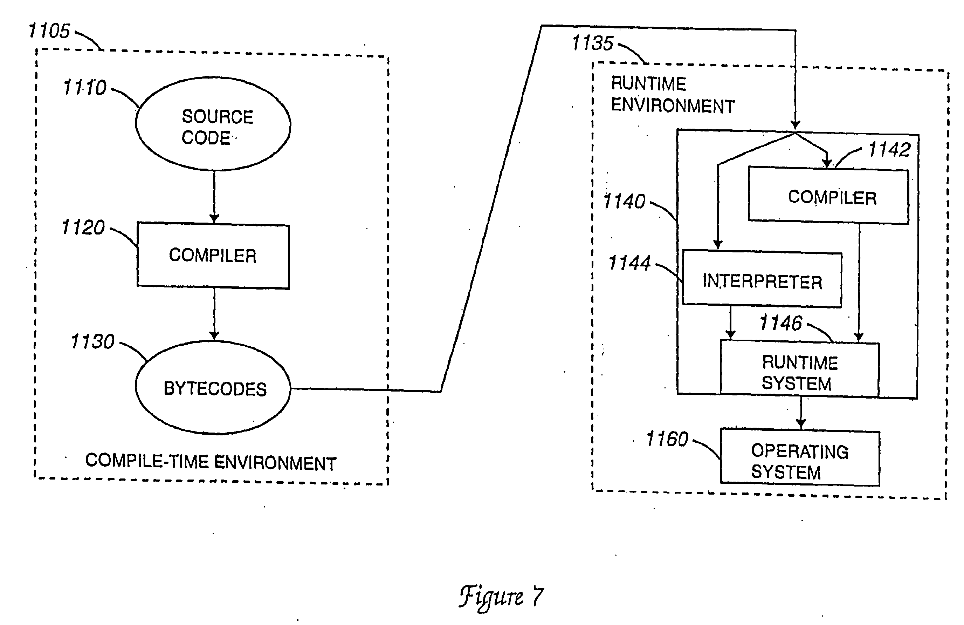

Computer system 1030 or, more specifically, CPUs 1032, may be arranged to support a virtual machine, as will be appreciated by those skilled in the art. One example of a virtual machine that is supported on computer system 1030 will be described below with reference to Figure 7. As is well known in the art, ROM acts to transfer data and instructions uni-directionally to the CPUs 1032, while RAM is used typically to transfer data and instructions in a bi-directional manner. CPUs 1032 may generally include any number of processors. Both primary storage devices 1034, 1036 may include any suitable computer-readable media. A secondary storage medium 1038, which is typically a mass memory device, is also coupled bi-directionally to CPUs 1032 and provides additional data storage capacity. The mass memory device 1038 is a computer-readable medium that may be used to store programs including computer code, data, and the like. Typically, mass memory device 1038 is a storage medium such as a hard disk or a tape which generally slower than primary storage devices 1034, 1036. Mass memory storage device 938 may take the form of a magnetic or paper tape reader or some other well-known device. It will be appreciated that the information retained within the mass memory device 1038, may, in appropriate cases, be incorporated in standard fashion as part of RAM 1036 as virtual memory. A specific primary storage device 1034 such as a CD-ROM may also pass data uni-directionally to the CPUs 1032.

CPUs 1032 are also coupled to one or more input/output devices 1040 that may include, but are not limited to, devices such as video monitors, track balls, mice, keyboards, microphones, touch-sensitive displays, transducer card readers, magnetic or paper tape readers, tablets, styluses, voice or handwriting recognizers, or other well-known input devices such as, of course, other computers. Finally, CPUs 1032 optionally may be coupled to a computer or telecommunications network, e.g., an Internet network or an intranet network, using a network connection as shown generally at 1012. With such a network connection, it is contemplated that the CPUs 1032 might receive information from the network, or might output information to the network in the course of performing the above-described mechanisms for aborting threads. Such information, which is often represented as a sequence of instructions to be executed using CPUs 1032, may be received from and outputted to the network, for example, in the form of a computer data signal embodied in a carrier wave. The above-described devices and materials will be familiar to those of skill in the computer hardware and software arts.

As previously mentioned, a virtual machine may execute on computer system 1030. Figure 7 is a diagrammatic representation of a virtual machine which is supported by computer system 1030 of Figure 6, and is suitable for implementing the present invention. When a computer program, *e*.*g*., a computer program written in the Java™ programming language, is executed, source code 1110 is provided to a compiler 1120 within compile-time environment 1105. Compiler 1120 translates source code 1110 into byte codes 1130. In general, source code 1110 is translated into byte codes 1130 at the time source code 1110 is created by a software developer.

Byte codes 1130 may generally be reproduced, downloaded, or otherwise distributed through a network, *e*.*g*., network 1012 of Figure 6, or stored on a storage device such as primary storage 1034 of Figure 6. In the described embodiment, byte codes 1130 are platform independent. That is, byte codes 1130 may be executed on substantially any computer system that is running on a suitable virtual machine 1140.

Byte codes 1130 are provided to a runtime environment 1135 which includes virtual machine 1140. Runtime environment 1135 may generally be executed using a processor or processors such as CPUs 1032 of Figure 6. Virtual machine 1140 includes a compiler 1142, an interpreter 1144, and a runtime system 1146. Byte codes 1130 may be provided either to compiler 1142 or interpreter 1144.

When byte codes 1130 are provided to compiler 1142, methods contained in byte codes 1130 are compiled into machine instructions. In one embodiment, compiler 1142 is a just-in-time compile which delays the compilation of methods contained in byte codes 1130 until the methods are about to be executed. When byte codes 1130 are provided to interpreter 1144, byte codes 1130 are read into interpreter 1144 one byte code at a time. Interpreter 1144 then performs the operation defined by each byte code as each byte code is read into interpreter 1144. That is, interpreter 1144 "interprets" byte codes 1130, as will be appreciated by those skilled in the art. In general, interpreter 1144 processes byte codes 1130 and performs operations associated with byte codes 1130 substantially continuously.

When a method is invoked by another method, or is invoked from runtime environment 1135, if the method is interpreted, runtime system 1146 may obtain the method from runtime environment 1135 in the form of a sequence of byte codes 1130, which may be directly executed by interpreter 1144. If, on the other hand, the method which is invoked is a compiled method which has not been compiled, runtime system 1146 also obtains the method from runtime environment 1135 in the form of a sequence of byte codes 1130, then may go on to activate compiler 1142. Compiler 1142 then generates machine instructions from byte codes 1130, and the resulting machine-language instructions may be executed directly by CPUs 1032. In general, the machine-language instructions are discarded when virtual machine 1140 terminates. The operation of virtual machines or, more particularly, Java™ virtual machines, is described in more detail in The Java^{™} Virtual Machine Specification by Tim Lindholm and Frank Yellin (ISBN 0-201-63452-X).

In the present invention, when the threads are restarted, the break instruction (referenced by an untrusted frame) may be implemented or executed by the interpreter in a suitable way. In one embodiment, when the interpreter encounters the break instruction, it throws a runtime exception. This exception results in the corresponding frame being popped from the thread stack. The exception also causes the trusted frames to execute any exception handling.

Although only a few embodiments of the present invention have been described, it should be understood that the present invention may be embodied in many other specific forms without departing from the scope of the present invention. By way of example, the operations involved with aborting associated threads may be reordered. Steps may also be removed or added without departing from the scope of the present invention.

Although the techniques for killing threads in accordance with the present invention are particularly suitable for implementation with respect to a Java^{™} based environment, the techniques may generally be applied in any suitable object-based environment. In particular, the techniques are suitable for use in platform-independent object-based environments. It should be appreciated that the methods may also be implemented in some distributed object-oriented systems.

Accordingly, the present embodiments are to be considered as illustrative and not restrictive, and the invention is not to be limited to the details given herein, but may be modified within the scope and equivalents of the appended claims.

## Claims

1. A method for aborting a plurality of threads related to misbehaving code that mounts a denial of service attack, each thread corresponding to a thread stack (100) that has at least one frame (102a-102e) referencing a code portion, the method comprising:
stopping (402) a plurality of related threads that share a same resource or a same object as a thread associated with the misbehaving code;
modifying (404) a first set of frames of the thread stacks of the related threads by modifying a program counter (512) in each frame in the first set of frames so that the frames in the first set of frames are automatically popped from their thread stacks during execution, thereby inhibiting execution of the modified frames' referenced code portions; and
restarting (406) the plurality of related threads to allow a second set of frames of the thread stacks to execute their referenced code portions.

2. A method as recited in claim 1, wherein the code portions referenced by the first set of frames is untrusted (216) and the code portions referenced by the second set of frames is trusted (214).

3. A method as recited in any of claims 1-2, wherein the first set of frames are modified by moving references from the code portions to a break instruction (202).

4. A method as recited in claim 3, wherein the second set of frames continue to reference the code portions (214) that they were referencing when the related threads were stopped.

5. A method as recited in claims 3 or 4, further comprising inhibiting any exception handling (516) of the first set of frames.

6. A method as recited in claim 5, wherein execution of the break instruction includes throwing an exception (518).

7. A method as recited in claims 5 or 6, wherein exception handling is inhibited by moving references from exception handling code to the break instruction (512).

8. A method as recited in any of claims 1-7, wherein the related threads were loaded by a same set of class loaders.

9. A method as recited in any of claims 1 to 8, wherein each related thread aborts immediately after restarting.

10. A method as recited in any of claims 1 to 8, wherein restarting includes aborting the related threads immediately upon unwinding the first set of frames and the second set of frames from the thread stacks (408).

11. A method as recited in any of claims 1-10, further comprising identifying the related threads as being associated with the misbehaving code.

12. A method as recited in claim 11, wherein the related threads are associated with a same resource context (502) that is associated with the misbehaving code.

13. A method as recited in claim 12, wherein the related threads are identified by determining which threads are referencing the same resource context that is associated with the misbehaving code (504).

14. A method as recited in any of claims 1-13, further comprising breaking a lock on a synchronized block when a particular one of the first set of frames is in the synchronized block (520).

15. A method as recited in any of claims 1-14, when a particular one of the first set of frames is in a blocking call, the method further comprising requesting that the call be aborted (524).

16. A method as recited in claim 15, wherein the request is accomplished by setting a timeout variable for the blocking call to 0 or 1 second.

17. A method as recited in claim 15, wherein the request is accomplished by setting an abort variable for the blocking call to indicate that the call should abort.

18. A method as recited in any of claims 1-17, when a particular one of the related threads is not schedulable, the method further comprising making the particular thread schedulable (530).

19. A method as recited in claim 18, wherein the particular thread is made schedulable by removing the particular thread from a wait queue.

20. A method as recited in claim 18, wherein the particular thread is made schedulable by adding the particular thread to a schedulable threads queue.

21. A method as recited in any of claims 18-20, wherein the particular thread is not schedulable when the particular thread is waiting for a locked synchronized block and a call to such synchronized block is associated with the misbehaving code.

22. A computer readable medium containing instructions for aborting a plurality of threads related to misbehaving code that mounts a denial of service attack, each thread corresponding to a thread stack (100) that has at least one frame (102a-102e) referencing a code portion, the computer readable medium comprising:
computer code for stopping (402) a plurality of related threads that share a same resource or a same object as a thread associated with the misbehaving code;
computer code for modifying (404) a first set of frames of the thread stacks of the related threads by modifying a program counter (512) in each frame in the first set of frames so that the frames in the first set of frames are automatically popped from their thread stacks during execution, thereby inhibiting execution of the modified frames' referenced code portions; and
computer code for restarting (406) the plurality of related threads to allow a second set of frames of the thread stacks to execute their referenced code portions.

23. A computer readable medium as recited in claim 22, wherein the code portions referenced by the first set of frames is untrusted (216) and the code portions referenced by the second set of frames is trusted (214).

24. A computer readable medium as recited in claims 22 or 23, wherein the first set of frames are modified by moving references from the code portions to a break instruction (202).

25. A computer readable medium as recited in claim 24 wherein the second set of frames continue to reference the code portions (214) that they were referencing when the related threads were stopped.

26. A computer readable medium as recited in claims 24 or 25, further comprising inhibiting any exception handling (516) of the first set of frames.

27. A computer readable medium as recited in claim 26, wherein execution of the break instruction includes throwing an exception (518).

28. A computer readable medium as recited in any of claims 22-27, wherein each related thread aborts immediately after restarting.

29. A computer readable medium as recited in any of claims 22 to 27, wherein the computer code for restarting includes computer code for aborting the related threads immediately upon unwinding the first set of frames and the second set of frames from the thread stacks (408).

30. A computer readable medium as recited in any of claims 22-29, further comprising breaking a lock on a synchronized block when a particular one of the first set of frames is in the synchronized block (520).

31. A computer readable medium as recited in any of claims 22-30, when a particular one of the first set of frames is in a blocking call, the method further comprising requesting that the call be aborted (524).

32. A computer readable medium as recited in any of claims 22-31, when a particular one of the related threads is not schedulable, the method further comprising making the particular thread schedulable (530).

33. A computer readable medium as recited in claim 32, wherein the particular thread is not schedulable when the particular thread is waiting for a locked synchronized block and a call to such synchronized block is associated with the misbehaving code.

34. A computer system operable to abort a plurality of threads related to misbehaving code that mounts a denial of service attack, each thread corresponding to a thread stack that has at least one frame referencing a code portion, comprising:
a memory (1034); and
a processor (1032) coupled to the memory (1034),
wherein at least one of the memory (1034) and the processor (1032) are adapted to provide:
stopping (402) a plurality of related threads that share a same resource or a same object as a thread associated with the misbehaving code;
modifying (404) a first set of frames of the thread stacks of the related threads by modifying a program counter (512) in each frame in the first set of frames so that the frames in the first set of frames are automatically popped from their thread stacks during execution, thereby inhibiting execution of the modified frames' referenced code portions; and
restarting (406) the plurality of related threads to allow a second set of frames of the thread stacks to execute their referenced code portions.

## Patentansprüche

1. Verfahren zum Abbrechen einer Vielzahl von Fäden, die mit einem fehlverhaltenden Code verwandt sind, der zu einer Dienstverweigerungsattacke führt, wobei jeder Faden einem Fadenstapel (100) entspricht, welcher mindestens einen einen Codeabschnitt abbildenden Rahmen (102a-102e) aufweist, wobei das Verfahren Folgendes umfasst:
Anhalten (402) einer Vielzahl verwandter Fäden, die dieselbe Ressource oder dasselbe Objekt wie ein dem fehlverhaltenden Code zugeordneter Faden benutzen;
Modifizieren (404) einer ersten Gruppe von Rahmen der Fadenstapel der verwandten Fäden durch Modifizieren eines Programmzählers (512) in jedem Rahmen der ersten Gruppe von Rahmen, so dass die Rahmen der ersten Gruppe von Rahmen automatisch während der Ausführung aus ihren Fadenstapeln ausklappen, wodurch die Ausführung der abgebildeten Codeabschnitte der modifizierten Rahmen verhindert wird; und
Neustarten (406) der Vielzahl verwandter Fäden, um einer zweiten Gruppe von Rahmen der Fadenstapel die Ausführung ihrer abgebildeten Codeabschnitte zu ermöglichen.

2. Verfahren nach Anspruch 1, wobei die durch die erste Gruppe von Rahmen abgebildeten Codeabschnitte nicht vertrauenswürdig sind (216) und die durch die zweite Gruppe von Rahmen abgebildeten Codeabschnitte vertrauenswürdig sind (214).

3. Verfahren nach einem der Ansprüche 1 bis 2, wobei die erste Gruppe von Rahmen modifiziert wird, indem Abbildungen von den Codeabschnitten zu einer Pausenanweisung bewegt werden (202).

4. Verfahren nach Anspruch 3, wobei die zweite Gruppe von Rahmen die Codeabschnitte (214) weiter abbilden, die sie abbildeten, als die verwandten Fäden angehalten wurden.

5. Verfahren nach Anspruch 3 oder 4, ferner umfassend das Verhindern jeder Ausnahmehandlung (516) der ersten Gruppe von Rahmen.

6. Verfahren nach Anspruch 5, wobei die Ausführung der Pausenanweisung das Verwerfen einer Ausnahme umfasst (518).

7. Verfahren nach Anspruch 5 oder 6, wobei Ausnahmehandlungen verhindert werden, indem Abbildungen von Ausnahmehandlungscodes zu der Pausenanweisung bewegt werden (512).

8. Verfahren nach einem der Ansprüche 1 bis 7, wobei die verwandten Fäden durch dieselbe Gruppe von Klassenladern geladen wurde.

9. Verfahren nach einem der Ansprüche 1 bis 8, wobei jeder verwandte Faden sofort nach dem Neustarten abbricht.

10. Verfahren nach einem der Ansprüche 1 bis 8, wobei das Neustarten das Abbrechen der verwandten Fäden sofort nach Abwicklung der ersten Gruppe von Rahmen und der zweiten Gruppe von Rahmen aus den Fadenstapeln umfasst (408).

11. Verfahren nach einem der Ansprüche 1 bis 10, ferner umfassend das Identifizieren der verwandten Fäden als dem fehlverhaltenden Code zugehörig.

12. Verfahren nach Anspruch 11, wobei die verwandten Fäden demselben Ressourcenkontext (502) zugeordnet sind, der dem fehlverhaltenden Code zugeordnet ist.

13. Verfahren nach Anspruch 12, wobei die verwandten Fäden durch Bestimmen, welche Fäden denselben Ressourcenkontext abbilden, der dem fehlverhaltenden Code (504) zugeordnet ist, identifiziert werden.

14. Verfahren nach einem der Ansprüche 1 bis 13, ferner umfassend das Aufbrechen eines Riegels an einem synchronisierten Block, wenn sich ein bestimmter der ersten Gruppe der Rahmen in dem synchronisierten Block befindet (520).

15. Verfahren nach einem der Ansprüche 1 bis 14, wenn sich ein bestimmter der ersten Gruppe von Rahmen in einem blockierenden Anruf befindet, das Verfahren ferner das Anfordern des Abbrechens des Anrufes umfasst (524).

16. Verfahren nach Anspruch 15, wobei die Anforderung durch Setzen einer Timeout-Variable für den blockierenden Anruf auf 0 oder 1 Sekunde erfolgt.

17. Verfahren nach Anspruch 15, wobei die Anforderung durch Setzen einer Abbruchsvariablen für den blockierenden Anruf erfolgt, um anzuzeigen, dass der Anruf abbrechen sollte.

18. Verfahren nach einem der Ansprüche 1 bis 17, wenn ein bestimmter der verwandten Fäden nicht planbar ist, das Verfahren ferner umfasst, dass der bestimmte Faden planbar gemacht wird (530).

19. Verfahren nach Anspruch 18, wobei der bestimmte Faden planbar gemacht wird, indem der bestimmte Faden aus einer Warteschlange entfernt wird.

20. Verfahren nach Anspruch 18, wobei der bestimmte Faden planbar gemacht wird, indem der bestimmte Faden zu einer Schlange planbarer Fäden hinzugefügt wird.

21. Verfahren nach einem der Ansprüche 18 bis 20, wobei der bestimmte Faden nicht planbar ist, wenn der bestimmte Faden auf einen verriegelten synchronisierten Block wartet und ein Anruf an einen solchen synchronisierten Block dem fehlverhaltenden Code zugeordnet ist.

22. Computerlesbares Medium, das Anweisungen zum Abbrechen einer Vielzahl von Fäden enthält, die mit dem fehlverhaltenden Code verwandt sind, der zu einer Dienstverweigerungsattacke führt, wobei jeder Faden einem Fadenstapel (100) entspricht, der mindestens einen Rahmen (102a-102e) aufweist, der einen Codeabschnitt abbildet, wobei das computerlesbare Medium Folgendes umfasst:
Computercode zum Anhalten (402) einer Vielzahl verwandter Fäden, die dieselbe Ressource oder dasselbe Objekt wie ein dem fehlverhaltenden Code zugeordneter Faden benutzen;
Computercode zum Modifizieren (404) einer ersten Gruppe von Rahmen der Fadenstapel der verwandten Fäden durch Modifizieren eines Programmzählers (512) in jedem Rahmen der ersten Gruppe von Rahmen, so dass die Rahmen der ersten Gruppe von Rahmen während der Ausführung automatisch aus ihren Fadenstapeln ausgeklappt werden, wodurch die Ausführung der abgebildeten Codeabschnitte der modifizierten Rahmen verhindert wird; und
Computercode zum Neustarten (406) der Vielzahl verwandter Fäden, um einer zweiten Gruppe von Rahmen des Fadenstapels die Ausführung ihrer abgebildeten Codeabschnitte zu ermöglichen.

23. Computerlesbares Medium nach Anspruch 22, wobei die durch die erste Gruppe von Rahmen abgebildeten Codeabschnitte nicht vertrauenswürdig sind (216) und die durch die zweite Gruppe von Rahmen abgebildeten Codeabschnitte vertrauenswürdig sind (214).

24. Computerlesbares Medium nach Anspruch 22 oder 23, wobei die erste Gruppe von Rahmen modifiziert wird, indem Abbildungen von dem Codeabschnitt zu einer Pausenanweisung bewegt werden (202).

25. Computerlesbares Medium nach Anspruch 24, wobei die zweite Gruppe von Rahmen die Codeabschnitte (214) weiter abbildet, die sie abgebildet hat, als die verwandten Fäden angehalten wurden.

26. Computerlesbares Medium nach Anspruch 24 oder 25, ferner umfassend das Verhindern jeder Ausnahmehandlung (516) der ersten Gruppe von Rahmen.

27. Computerlesbares Medium nach Anspruch 26, wobei die Ausführung der Pausenanweisung das Verwerfen einer Ausnahme umfasst (518).

28. Computerlesbares Medium nach einem der Ansprüche 22 bis 27, wobei jeder verwandte Faden sofort nach dem Neustarten abbricht.

29. Computerlesbares Medium nach einem der Ansprüche 22 bis 27, wobei der Computercode zum Neustarten einen Computercode zum Abbrechen der verwandten Fäden sofort nach Abwicklung der ersten Gruppe von Rahmen und der zweiten Gruppe von Rahmen aus den Rahmenstapeln enthält (408).

30. Computerlesbares Medium nach einem der Ansprüche 22 bis 29, ferner umfassend das Aufbrechen eines Riegels an einem synchronisierten Block, wenn sich ein bestimmter der ersten Gruppe von Rahmen in dem synchronisierten Block befindet (520).

31. Computerlesbares Medium nach einem der Ansprüche 22 bis 30, wenn ein bestimmter der ersten Gruppe von Rahmen sich in dem blockierenden Anruf befindet, das Verfahren ferner die Anforderung umfasst, dass der Anruf abgebrochen wird (524).

32. Computerlesbares Medium nach einem der Ansprüche 22 bis 33, wenn ein bestimmter der verwandten Fäden nicht planbar ist, das Verfahren ferner umfasst, dass der bestimmte Faden planbar gemacht wird (530).

33. Computerlesbares Medium nach Anspruch 32, wobei der bestimmte Faden nicht planbar ist, wenn ein bestimmter Faden auf einen verriegelten synchronisierten Block wartet und ein Anruf an einen solchen synchronisierten Block dem fehlverhaltenden Code zugeordnet ist.

34. Computersystem, das funktionsfähig ist, eine Vielzahl von Fäden, die mit einem fehlverhaltenden Code verwandt sind, der zu einer Dienstverweigerungsattacke führt, abzubrechen, wobei jeder Faden einem Fadenstapel entspricht, der mindestens einen einen Codeabschnitt abbildenden Rahmen aufweist, umfassend:
einen Speicher (1034); und
einen Prozessor (1032), der mit dem Speicher (1034) gekoppelt ist,
wobei mindestens der Speicher (1034) und/oder der Prozessor (1032) ausgelegt ist/sind, um Folgendes bereitzustellen:
Anhalten (402) einer Vielzahl verwandter Fäden, die dieselbe Ressource oder dasselbe Objekt wie ein dem fehlverhaltenden Code zugeordneter Faden benutzen,
Modifizieren (404) einer ersten Gruppe von Rahmen der Fadenstapel der verwandten Fäden durch Modifizieren eines Programmzählers (512) in jedem Rahmen der ersten Gruppe von Rahmen, so dass die Rahmen in der ersten Gruppe von Rahmen während ihrer Ausführung automatisch aus ihren Fadenstapeln ausgeklappt werden, wodurch die Ausführung der abgebildeten Codeabschnitte der modifizierten Rahmen verhindert wird; und
Neustarten (406) der Vielzahl von verwandten Fäden, um einer zweiten Gruppe von Rahmen der Fadenstapel die Ausführung ihrer abgebildeten Codeabschnitte zu ermöglichen.

## Revendications

1. Procédé pour abandonner une pluralité de fils apparentés à un code de mauvaise conduite, qui met en oeuvre une attaque de déni de service, chaque fil correspondant à une pile de fils (100) ayant au moins une trame (102a-102e) référençant une partie de code, le procédé comprenant :
l'arrêt (402) d'une pluralité de fils apparentés qui partagent une même ressource ou un même objet en tant que fil associé au code de mauvaise conduite ;
la modification (404) d'un premier ensemble de trames de piles de fils des fils apparentés en modifiant un compteur de programme (512) dans chaque trame dans le premier ensemble de trames, de sorte que les trames dans le premier ensemble de trames soient automatiquement sorties de leurs piles de fils durant l'exécution, inhibant ainsi l'exécution des parties de code référencées des trames modifiées ; et
le redémarrage (406) de la pluralité de fils apparentés pour permettre à un second ensemble de trames des piles de fils d'exécuter leurs parties de code référencées.

2. Procédé selon la revendication 1, dans lequel les parties de code référencées par le premier ensemble de trames sont non sécurisées (216) et les parties de code référencées par le second ensemble de trames sont sécurisées (214).

3. Procédé selon l'une quelconque des revendications 1 et 2, dans lequel le premier ensemble de trames est modifié en déplaçant les références des parties de code vers une instruction de rupture (202).

4. Procédé selon la revendication 3, dans lequel le second ensemble de trames continue de référencer les parties de code (214) qu'il était en train de référencer lorsque les fils apparentés ont été arrêtés.

5. Procédé selon l'une quelconque des revendications 3 et 4, comprenant en outre l'inhibition de tout traitement d'exception (516) du premier ensemble de trames.

6. Procédé selon la revendication 5, dans lequel l'exécution de l'instruction de rupture inclut le lancement d'une exception (518).

7. Procédé selon l'une quelconque des revendications 5 et 6, dans lequel le traitement d'exception est inhibé en déplaçant les références d'un code de traitement d'exception vers une instruction de rupture (512).

8. Procédé selon l'une quelconque des revendications 1 à 7, dans lequel les fils apparentés ont été chargés par un même ensemble de chargeurs de classe.

9. Procédé selon l'une quelconque des revendications 1 à 8, dans lequel chaque fil apparenté est abandonné immédiatement après le redémarrage.

10. Procédé selon l'une quelconque des revendications 1 à 8, dans lequel le redémarrage inclut l'abandon immédiat des fils apparentés par le déroulement du premier ensemble de trames et du second ensemble de trames à partir des piles de fils (408).

11. Procédé selon l'une quelconque des revendications 1 à 10, comprenant en outre l'identification des fils apparentés comme étant associés au code de mauvaise conduite.

12. Procédé selon la revendication 11, dans lequel les fils apparentés sont associés au même contexte de ressource (502) qui est associé au code de mauvaise conduite.

13. Procédé selon la revendication 12, dans lequel les fils apparentés sont identifiés en déterminant quels fils référencent le même contexte de ressource qui est associé au code de mauvaise conduite (504).

14. Procédé selon l'une quelconque des revendications 1 à 13, comprenant en outre la rupture d'un verrouillage sur un bloc synchronisé lorsqu'une trame particulière du premier ensemble de trames est dans le bloc synchronisé (520).

15. Procédé selon l'une quelconque des revendications 1 à 14, lorsqu'une trame particulière du premier ensemble de trames est dans un appel de blocage, le procédé comprend en outre la demande que l'appel soit abandonné (524).

16. Procédé selon la revendication 15, dans lequel la demande est accomplie en réglant une variable de dépassement de temps imparti pour l'appel de blocage sur 0 ou 1 seconde.

17. Procédé selon la revendication 15, dans lequel la demande est réalisée en réglant une variable d'abandon pour l'appel de blocage pour indiquer que l'appel doit être abandonné.

18. Procédé selon l'une quelconque des revendications 1 à 17, lorsqu'un fil particulier des fils apparentés n'est pas programmable, le procédé comprend en outre l'action consistant à rendre le fil particulier programmable (530).

19. Procédé selon la revendication 18, dans lequel le fil particulier est rendu programmable en déplaçant le fil particulier à partir d'un file d'attente.

20. Procédé selon la revendication 18, dans lequel le fil particulier est rendu programmable en ajoutant le fil particulier à une file de fils programmables.

21. Procédé selon l'une quelconque des revendications 18 à 20, dans lequel le fil particulier n'est pas programmable lorsque le fil particulier attend un blocage synchronisé verrouillé, et un appel vers un tel bloc synchronisé est associé au code de mauvaise conduite.

22. Support lisible par ordinateur contenant des instructions pour abandonner une pluralité de fils apparentés à un code de mauvaise conduite qui met en oeuvre une attaque de déni de service, chaque fil correspondant à une pile de fils (100) ayant au moins une trame (102a-102e) référençant une partie de code, le support lisible par ordinateur comprenant :
un code informatique pour arrêter (402) une pluralité de fils apparentés qui partagent une même ressource ou un même objet en tant que fil associé au code de mauvaise conduite ;
un code informatique pour modifier (404) un premier ensemble de trames des piles de fils des fils apparentés en modifiant le compteur de programme (512) dans chaque trame dans le premier ensemble de trames, de sorte que les trames dans le premier ensemble de trames soient automatiquement sorties de leurs piles de fils durant l'exécution, inhibant ainsi l'exécution des parties de code référencées des trames modifiées ; et
un code informatique pour redémarrer (406) la pluralité de fils apparentés pour permettre à un second ensemble de trames des piles de fils d'exécuter leurs parties de code référencées,

23. Support lisible par ordinateur selon la revendication 22, dans lequel les parties de code référencées par le premier ensemble de trames sont non sécurisées (216) et les parties de code référencées par le second ensemble de trames sont sécurisées (214).

24. Support lisible par ordinateur selon la revendication 22 ou 23, dans lequel le premier ensemble de trames est modifié en déplaçant les références à partir des parties de code vers une instruction de rupture (202).

25. Support lisible par ordinateur selon la revendication 24, dans lequel le second ensemble de trames continue de référencer les parties de code (214) qu'il était en train de référencer lorsque les fils apparentés ont été arrêtés.

26. Support lisible par ordinateur selon la revendication 24 ou 25, comprenant en outre l'inhibition de tout traitement d'exception (516) du premier ensemble de trames.

27. Support lisible par ordinateur selon la revendication 26, dans lequel l'exécution de l'instruction de rupture inclut le lancement d'une exception (518).

28. Support lisible par ordinateur selon l'une quelconque des revendications 22 à 27, dans lequel chaque fil apparenté est immédiatement abandonné après le redémarrage.

29. Support lisible par ordinateur selon l'une quelconque des revendications 22 à 27, dans lequel le code informatique permettant le redémarrage inclut un code informatique pour abandonner les fils apparentés immédiatement après le déroulement du premier ensemble de trames en du second ensemble de trames à partir des piles de fils (408).

30. Support lisible par ordinateur selon l'une quelconque des revendications 22 à 29, comprenant en outre la rupture d'un verrouillage sur un bloc synchronisé lorsqu'une trame particulière du premier ensemble de trames est dans le bloc synchronisé (520).

31. Support lisible par ordinateur selon l'une quelconque des revendications 22 à 30, lorsqu'une trame particulière du premier ensemble de trames est dans un appel de blocage, le procédé comprend en outre la demande que l'appel soit abandonné (524).

32. Support lisible par ordinateur selon l'une quelconque des revendications 22 à 31, lorsqu'un fil particulier des fils apparentés n'est pas programmable, le procédé comprend en outre l'action consistant à rendre le fil particulier programmable (530).

33. Support lisible par ordinateur selon la revendication 32, dans lequel le fil particulier n'est pas programmable lorsque le fil particulier attend un bloc synchronisé verrouillé et un appel d'un tel bloc synchronisé est associé au code de mauvaise conduite.

34. Système informatique pour abandonner une pluralité de fils apparentés à un code de mauvaise conduite qui met en oeuvre une attaque de déni de service, chaque fil correspondant à une pile de fils ayant au moins une trame référençant une partie de code, comprenant:
une mémoire (1034) ; et
un processeur (1032) couplé à la mémoire (1034),
dans lequel au moins la mémoire (1034) ou le processeur (1032) est adapté à fournir :
l'arrêt (402) de la pluralité de fils apparentés qui partagent une même ressource ou un même objet en tant que fil associé au code de mauvaise conduite ;
la modification (404) d'un premier ensemble de trames des piles de fils des fils apparentés en modifiant un compteur de programme (512) dans chaque trame dans le premier ensemble de trames, de sorte que les trames dans le premier ensemble de trames soient automatiquement sorties de leurs piles de fils durant l'exécution, inhibant ainsi l'exécution des parties de code référencées des trames modifiées ;
et
le redémarrage (406) de la pluralité de fils apparentés pour permettre au second ensemble de trames des piles de fils d'exécuter leurs parties de code référencées.
